# EUROPÄISCHE PATENTSCHRIFT

(11) **EP 1 269 015 B1**
(45) Veröffentlichungstag und Bekanntmachung des Hinweises auf die Patenterteilung: **24.08.2005**
(21) Anmeldenummer: 01929272.1
(22) Anmeldetag: 28.03.2001
(51) Int. Cl.: F03D 7/04

(54) **TURMEIGENFREQUENZABHÄNGIGE BETRIEBSFÜHRUNG VON OFFSHORE-WINDENERGIEANLAGEN**
METHOD FOR OPERATING OFFSHORE WIND TURBINE PLANTS BASED ON THE FREQUENCY OF THEIR TOWERS
PROCEDE POUR FAIRE FONCTIONNER DES EOLIENNES OFFSHORE EN FONCTION DE LA FREQUENCE DE RESONANCE DE LA TOUR

(30) Priorität: 05.04.2000 DE 10016912
(43) Veröffentlichungstag der Anmeldung: 02.01.2003
(73) Patentinhaber: Aerodyn Engineering GmbH, 24768 Rendsburg (DE)
(72) Erfinder: SIEGFRIEDSEN, Sönke, 25878 Drage (DE)
(74) Vertreter: Biehl, Christian
(86) Internationale Anmeldenummer: PCT/DE2001/001189
(87) Internationale Veröffentlichungsnummer: WO 2001/077524

(56) Entgegenhaltungen:
- EP-A- 0 244 341
- WO-A-99/36695
- US-A- 4 266 911
- US-A- 4 420 692
- US-A- 4 435 647

## Beschreibung

Windenergieanlagen, die z.Zt. im wesentlichen an Land installiert werden, sind auf mehr oder weniger festem Baugrund gegründet. Bei genügender Tragfähigkeit des Bodens sind Flachgründungen aus Beton für die statischen und dynamischen Anforderungen ausreichend. Wenn der Oberflächenbereich zu geringe Tragfähigkeiten aufweist, werden Pfähle in die darunter liegenden tragfähigen Schichten eingebracht, um die Lasten der Windenergieanlage in den Erdboden einzuleiten. Ein Auslegungskriterium für die Strukturdimensionierung von Turm und Gründungsteil sind die niedrigsten Turmbiegeeigenfrequenzen.

Die anregenden Frequenzen des Rotors müssen im Betrieb der Anlage immer einen gewissen Abstand von den o.g. Turmeigenfrequenzen haben, da ansonsten dynamische Überhöhungen der Strukturbelastung mit der Folge eines frühzeitigen Bauteilermüdungsversagens auftreten. Die Anregungsfrequenzen sind dabei die Rotordrehzahl und deren Blattvielfaches. Diese dynamischen Überhöhungen aufrund von Resonanzen sind unbedingt zu vermeiden, um die vorgesehene rechnerische Lebensdauer der lastübertragenden Bauteile einer Windenergieanlage zu erreichen. Daher wird durch die Strukturdimensionierung des Turms und der Gründung von landgestützten Anlagen die erste Turmeigenfrequenz üblicherweise so ausgelegt, daß die Anregefrequenz unter allen Betriebsbedingungen einen genügenden Abstand zu den Anregefrequenzen aufweisen.

Bei der rechnerischen Auslegung der erforderlichen Eigenfrequenzen sind die Eigenschaften des umgebenden Erdbodens zu berücksichtigen. Diese Bodeneigenschaften beeinflussen die Steifigkeit der Fundamenteinspannung und damit die Eigenfrequenzen. Bei landgestützten Anlagen verändern sich diese Einspannsteifigkeiten des Fundaments in erster Näherung über die Zeit nicht. Daher bleiben auch die Eigenfrequenzen der Anlage über die Lebensdauer nahezu konstant.

In der EP 0 244 341 A1 wird auf das Auftreten von Resonanzen hingewiesen, die bei Erreichen einer bestimmten Drehzahl der Rotoren auftreten. Es wird vorgeschlagen, diesen Bereich durch schnelles Durchfahren zu vermeiden.

Bei Offshore-Anlagen, die mit einem oder mehreren Pfählen mit dem Meeresboden verankert sind, werden die Pfähle aufgrund von strömungsumlagerungen um die Gründungsstruktur, Tiedenströmung oder starken Wellenbewegung werden die Pfähle mehr oder weniger ausgespült.

Diese als Auskolkung bezeichnete Erscheinung hat zur Folge, daß sich die Einspannsteifigkeit des Pfahls verändert und damit auch die Eigenfrequenz des Turms. Ferner wird auch die Dynamik der Anlage selbst zur Veränderung des den Pfahl umschließenden Meeresbodens führen und somit ebenfalls zur Veränderung der Eigenfrequenz. Hinzu kommt, daß in einem Offshore-Windpark die Bodenverhältnisse an jedem Anlagenstandort anders sind. Da die Gründungsteile aber aus Kostengründen einheitlich ausgebildet sein sollten, wird die Einspannsteifigkeit und damit die Turmeigenfrequenz für jede Anlage verschieden sein. Diese Veränderungen und Unterschiede sind nicht vorausberechenbar, zufällig und damit für jede Anlage anders und über die Zeit permanent veränderlich. Dieses kann dazu führen, daß die Anlagen bei sich verändernden Eigenfrequenzen überhöhte Betriebsfestigkeitslasten erfahren und frühzeitig versagen.

Der Erfindung liegt die Aufgabe zugrunde, auch bei Anlagen mit sich ändernden Eigenfrequenzen ein vorzeitiges Versagen der Anlage zu vermeiden.

Erfindungsgemäß wird diese Aufgabe durch die Merkmale des Anspruchs 1 gelöst. Die kritischen Eigenfrequenzen der Anlage werden dabei ständig erfaßt, wobei Veränderungen der Einspannfestigkeit erkannt werden und der verbotene Resonanzbereich entsprechend verschoben wird.

Bei der kritischen Eigenfrequenz handelt es sich vorzugsweise um die Biegeeigenfrequenz der Gesamtanlage, es kann sich dabei jedoch auch um die Eigenfrequenz beispielsweise insbesondere der Rotorblätter handeln.

Die kritische Biegeeigenfrequenz wird vorzugsweise über Beschleunigungssensoren, Dehnungsmeßstreifen oder Wegsensoren permanent erfaßt.

Die Erfindung wird im folgenden in einer Zeichnung erläutert. Dabei zeigen die
- Fig. 1a, 1b und 1c: Ansichten einer Offshore-Windenergieanlage bei von a nach c zunehmender Auskolkung,
- Fig. 2: die Anregefrequenz in Abhängigkeit von der Drehzahl und den verbotenen Drehzahlbereich in Abhängigkeit von der kritischen Eigenfrequenz der Anlagen und
- Fig. 3: eine Darstellung der dynamischen Überhöhung in Abhängigkeit von dem Verhältnis der Anregungsfrequenz zur Eigenfrequenz der Anlage.

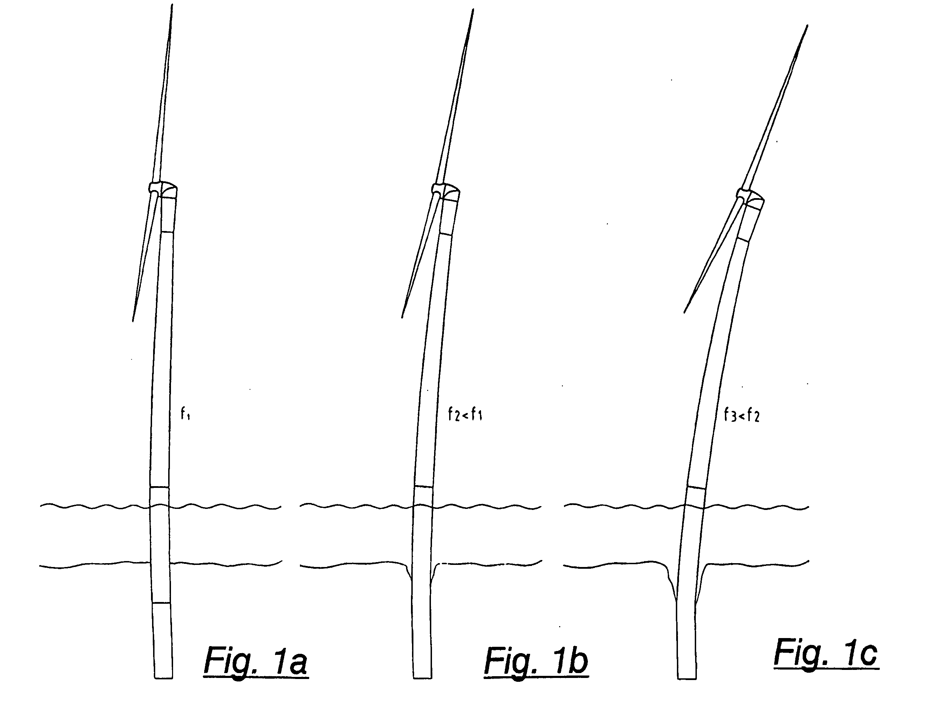

Fig. 1a zeigt die Auslenkung einer Offshore-Windenergieanlage, bei der keine Auskolkung der Gründung aufgetreten ist.

Bei Erreichen der Biegeeigenfrequenz F1 erfolgt nur eine relativ geringe Biegung des Turms. Bei einer beginnenden Auskolkung ( Fig. 1b) ist die Auslenkung stärker, die in Eigenfrequenz F2 ist kleiner als die Eigenfrequenz in dem Fig. 1a dargestelltem Fall. In Fig. 1c ist die Auskolkung deutlich stärker, die Eigenfrequenz F3 ist kleiner als die in dem in Fig. 1b dargestellten Zustand, die Auslenkung entsprechend höher.

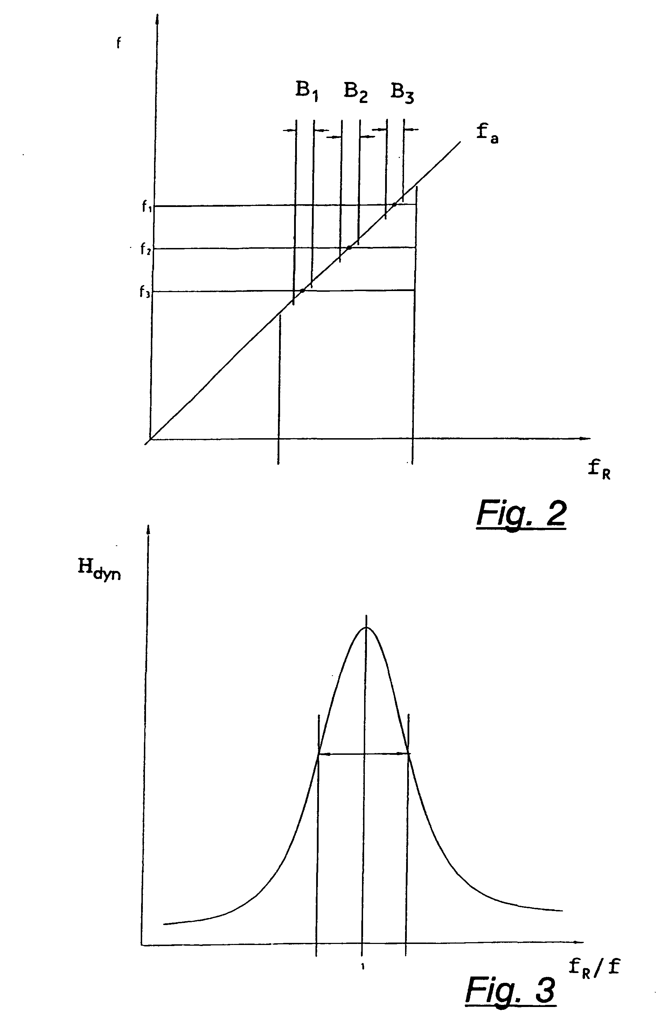

Fig. 2 zeigt die verbotenen Drehzahlbereiche einer Anlage in Abhängigkeit von den sich verändernden kritischen Eigenfrequenzen f₁ und f₂.

Um nun zu vermeiden, daß die Anlage in dem Bereich der Resonanzfrequenz betrieben wird, wird die jeweilige kritische Eigenfrequenz der Anlage bestimmt und die Drehzahl des Rotors festgestellt, bei der die Anlage im Bereich ihrer kritischen Eigenfrequenz erregt wird. Dieser Drehzahlbereich wird nun bei dem Betrieb der Windenergieanlage vermieden, indem nur unterhalb oder oderhalb des kritischen Drehzahlbereichs gearbeitet wird und - falls erforderlich - der kritische Drehzahlbereich schnell durchfahren wird.

Fig. 3 zeigt die dynamische Überhöhung, die bei dem Erreichen bestimmter Rotorfrequenzen bewirkt wird, als Verhältnis der Erregungsfrequenz f_{R} zur Eigenfrequenz f. Wenn dieses Verhältnis in der Nähe von 1 ist, wird der "verbotene Bereich" erreicht, der schnell zu durchfahren ist (eine Überhöhung der dynamischen Belastungen um 10 % hat eine Verkürzung der Lebensdauer um 50% zur Folge).

Die jeweilige Biegeeigenfrequenz kann dabei durch Beschleunigungssensoren, Dehnungsmeßstreifen oder aber Wegsensoren erfaßt werden; von Bedeutung ist, daß diese regelmäßig erfaßt wird, da sie sich über die Zeit, insbesondere auch in Abhängigkeit von der zunehmenden Auskolkung, ändert.

Es versteht sich, daß als kritische Eigenfrequenz nicht nur die der Gesamtanlage in Betracht kommt, sondern auch die wesentlicher Anlagenteile, insbesondere auch der Rotorblätter.

## Patentansprüche

1. Verfahren zum Betreiben einer mit variabler Rotordrehzahl betriebenen Windenergieanlage, die mit einer Einrichtung zum Regeln der Rotordrehzahl versehen ist, mit den folgenden Schritten:
- Bestimmen der jeweiligen kritischen Biegeeigenfrequenz der Anlage,
- Bestimmen eines bei der Erregung der Anlage im Bereich von deren kritischen Biegeeigenfrequenz gegebenen Rotordrehzahlbereichs, und
- schnelles Durchfahren des kritischen Rotordrehzahlbereichs,
**dadurch gekennzeichnet, dass**
- bei einer Offshore-Windenergieanlage die Anlage nur unterhalb oder oberhalb des kritischen Rotordrehzahlbereichs betrieben und dieser - falls erforderlich - schnell durchfahren wird,
- die kritische Biegeeigenfrequenzen ständig erfasst werden und der zu vermeidende, ggf. schnell zu durchfahrende Rotordrehzahlbereich entsprechend gleitend bestimmt wird.

2. Verfahren nach Anspruch 1, **dadurch gekennzeichnet, daß** die Biegeeigenfrequenzerfassung die Anlagenführung permanent mit einem gleitenden Sollwert für den zu vermeidenden Rotordrehzahlbereich versorgt, die wiederum die entsprechende Rotordrehzahl der Anlage einstellt.

3. Verfahren nach einem der vorangehenden Ansprüche, **dadurch gekennzeichnet, daß** die kritische Biegeeigenfrequenz über Beschleunigungssensoren, Dehnungsmeßstreifen oder Wegsensoren erfaßt wird.

## Claims

1. Method for operating a wind power plant operated with variable rotor speed range, provided with a rotor speed regulating device, with the following steps:
- determining the at the time critical natural bending frequency of the plant,
- determining of the rotor speed range in which there is an excitation of the plant in the range of the critical natural bending frequency thereof, and
- rapidly passing the critical rotor speed range,
**characterized in that**
- in an offshore wind power plant the plant is operated solely below or above the critical rotor speed range and the same is - if necessary - rapidly passed,
- the critical natural bending frequency is determined continuously and the rotor speed range to be avoided or if given, to be passed rapidly, is determined in a sliding manner.

2. Method according to claim 1, **characterized in that**, the natural bending frequency determination provides the plant management permanently with a sliding nominal value or the forbidden rotor speed range, which in turn sets the corresponding speed regulation of the plant.

3. Method according to claim 1, **characterized in that**, the critical natural bending frequency is determined by means of acceleration sensors, strain gauges or path sensors.

## Revendications

1. Procédé destiné à faire fonctionner une éolienne fonctionnant avec une gamme de vitesses de rotation du rotor variable, muni d'un dispositif de régulation de vitesse de rotor, se basant sur les étapes consistant à :
déterminer la fréquence de flexion naturelle critique actuelle de l'installation,
déterminer la gamme des vitesses de rotation, dans laquelle il y a une excitation de l'installation dans la gamme de la fréquence de flexion naturelle critique de cette dernière, et
passer rapidement la gamme critique des vitesses du rotor,
**caractérisé en ce que**
- dans une éolienne en mer, l'installation fonctionne uniquement en dessous ou au-dessus de la gamme critique des vitesses de rotor et cette dernière est rapidement passée - si besoin est,
- la fréquence de flexion naturelle critique est déterminée de manière continue et la gamme des vitesses du rotor à éviter ou si donnée, à passer rapidement, est déterminée de manière glissante.

2. Procédé selon la revendication 1, **caractérisé en ce que**, la détermination de fréquence de flexion naturelle fournit de façon permanente à la gestion de l'installation une valeur nominale de glissement ou la gamme des vitesses du rotor interdites, qui à son tour fixe la régulation de vitesse correspondante de l'installation.

3. Procédé selon la revendication 1, **caractérisé en ce que** la fréquence de flexion naturelle critique est déterminée au moyen de capteurs accélérométriques, d'extensomètres (jauges de contrainte) ou de capteurs de trajectoire.
